# EUROPÄISCHE PATENTSCHRIFT

(11) **EP 2 390 429 B1**
(45) Veröffentlichungstag und Bekanntmachung des Hinweises auf die Patenterteilung: **08.05.2019**
(21) Anmeldenummer: 11401504.3
(22) Anmeldetag: 03.05.2011
(51) Int. Cl.: E03C 1/322, E03D 11/14, F16B 35/06

(54) **Befestigungsvorrichtung insbesondere für wandhängende Sanitärobjekte**
Fixing device, in particular for sanitary objects fixed to the wall
Dispositif de fixation, notamment pour objets sanitaires suspendus au mur

(30) Priorität: 25.05.2010 DE 102010021384
(43) Veröffentlichungstag der Anmeldung: 30.11.2011
(73) Patentinhaber: fischerwerke GmbH & Co. KG, 72178 Waldachtal (DE)
(72) Erfinder: Miotto, Moreno, 35028 Piove di Sacco (IT)

(56) Entgegenhaltungen:
- WO-A1-2009/071178
- WO-A1-2009/074301

## Beschreibung

Die Erfindung betrifft eine Befestigungsvorrichtung insbesondere für wandhängende Sanitärobjekte mit den Merkmalen des Oberbegriffs des Anspruchs 1.

Aus der Druckschrift WO 2009/074301 ist eine Befestigungsvorrichtung für ein Sanitärobjekt, im Speziellen ein Toilettenbecken, bekannt. Die bekannte Befestigungsvorrichtung weist einen hakenförmigen Grundkörper auf, der mit einer Anlagefläche an einer Wand zur Anlage kommt und an der Wand befestigbar ist. Auf einer senkrecht zur Wand stehenden Auflagerfläche kann das Sanitärobjekt abgestützt werden. Gehalten wird das Sanitärobjekt mittels einer Schraube, die durch eine Aufnahmeöffnung des Sanitärobjekts hindurch bis in den Grundkörper reicht. Am Grundkörper ist ein Schlitten mit einer Mutter linear geführt, wobei die Führung schräg zur Anlagefläche angeordnet ist. Die Schraube greift in die Mutter. Durch Anziehen der Mutter wird der Schlitten entlang seiner Führung verschoben und hierdurch eine Kraft erzeugt, die das Sanitärobjekt sowohl zum Grundkörper als auch zur Wand zieht.

Am Kopf der Schraube ist ein Käfig mit einer Käfigmutter angebracht. Diese Käfigmutter dient der Befestigung eines weiteren Teils am Sanitärobjekt, insbesondere der Befestigung eines Scharniers eines Beckensitzes. Die Schraube erhält so eine zusätzliche Befestigungsfunktion. Anders ausgedrückt dienen der Käfig und die Käfigmutter zusammen als Adapterelement zur Befestigung eines weiteren Teils am Sanitärobjekt. Der Käfig sitzt auf einer Hülse auf, die wiederum auf dem Grundkörper aufsitzt. Dies bewirkt, dass der Käfig nur durch Reibung gegen Verdrehen gesichert ist. Hierdurch besteht die Gefahr, dass es zu einem Mitdrehen des Käfigs beim Ein- oder Ausschrauben der Schraube eines Scharniers in die Käfigmutter kommt. Insbesondere beim Demontieren kann dies zur Folge haben, dass eine zerstörungsfreie Demontage unmöglich wird.

Der Erfindung liegt daher die Aufgabe zu Grunde, die Montage- und Demontageeigenschaften einer derartigen Befestigungsvorrichtung zu verbessern.

Diese Aufgabe wird erfindungsgemäß durch die Merkmale des Anspruchs 1 gelöst.

Die erfindungsgemäße Befestigungsvorrichtung weist einen Grundkörper auf, der eine Anlagefläche zur Anlage an einer Wand aufweist. Der Grundkörper dient der Befestigung eines Objekts, insbesondere eines Sanitärobjekts wie ein Toilettenbecken. Die Befestigungsvorrichtung weist einen Schlitten auf, der schräg zur Anlagefläche geführt ist. Dabei muss die Führung nicht linear sein, sondern sie kann beispielsweise auch bogenförmig sein, was sich auf die aus dem Anzugsmoment resultierenden Befestigungskräfte in Richtung und Größe auswirkt. Der Schlitten weist ein Innengewindeelement auf, das insbesondere drehfest mit dem Schlitten verbunden ist. Das Innengewindeelement kann auch einstückig mit dem Schlitten sein. Vorzugsweise ist ein Innengewinde vorgeformt, es kann jedoch auch ein Abschnitt vorgesehen werden, in dem während der Montage des Objekts an einer Wand erst das Innengewinde geformt wird. Hierzu kann beispielsweise eine Bohrung mit nach innen stehenden Längsrippen vorgesehen werden. Weiterhin weist die Befestigungsvorrichtung eine Schraube zur Durchführung durch eine Aufnahmeöffnung des Objekts auf, die in das Innengewindeelement einschraubbar ist. Am Kopf der Schraube ist ein Adapterelement mit einem Aufnahmegewinde angeordnet. Das Aufnahmegewinde kann ein Innen- oder Außengewinde sein. Es dient der Befestigung eines weiteren Teils, insbesondere der Befestigung eines Scharniers für einen Beckensitz und -deckel. Das Adapterelement ist zugfest mit der Schraube verbunden, so dass beispielsweise ein Scharnier mit Vorspannung gegen das Becken montiert werden kann. Das Aufnahmegewinde ist radial verschieblich zur Schraube, wodurch insbesondere ein Toleranzausgleich möglich wird, wenn beispielsweise ein Beckensitz mit zwei Scharnieren an den Schrauben zweier erfindungsgemäßer Befestigungsvorrichtungen befestigt wird und deren Position nicht genau mit dem Abstand der Scharniere korrespondiert. Die Verschieblichkeit des Aufnahmegewindes kann einerseits durch eine Verschieblichkeit des Adapterelements zum Schraubenkopf und andererseits durch eine Verschieblichkeit innerhalb des Adapterelements erreicht werden. Weiterhin ist das Adapterelement formschlüssig drehfest mit dem Kopf verbunden. Gegenüber dem Stand der Technik hat dies den großen Vorteil, dass es regelmäßig nicht zu einer Verdrehung des Adapterelements zur Schraube kommt. Bei der Montage beispielsweise eines Scharniers an der Befestigungsvorrichtung wird, gleichsinnige Gewinde vorausgesetzt, das Objekt eher noch mehr an die Wand gezogen. Die Demontage des Scharniers könnte zwar im schlimmsten Fall dazu führen, dass sich der Schlitten lockert, jedoch niemals dazu, dass das Adapterelement durchdreht und eine zerstörungsfreie Demontage unmöglich wird. Insbesondere durch die Wahl eines größeren Gewindedurchmessers der Schraube als des Aufnahmegewindes können die Drehmomente so eingestellt werden, dass das Lösen beispielsweise einer Scharnierschraube niemals zum Mitdrehen der Schraube der Befestigungsvorrichtung führt.

Zur Erstellung einer formschlüssigen, drehfesten Verbindung zwischen Adapterelement und Kopf der Schraube weist der Kopf vorzugsweise eine, insbesondere zwei sekantenartig angeordnete Nuten auf. Dies ermöglicht eine einfache Herstellung ausgehend von einer Standardschraube und ermöglicht außerdem neben der formschlüssigen Drehverbindung auch eine formschlüssige Zugverbindung.

Mit einem derart gestalteten Kopf korrespondiert vorzugsweise der Adapter, in dem er mindestens eine Klaue aufweist, die in die mindestens eine Nut eingreift und mit der Schraube eine Schnappverbindung bildet. Dies verhindert auf einfache Weise insbesondere bei der Vormontage, beim Transport und bei der Montage des Objekts vor Ort, dass die Verbindung von Adapterelement und Schraube ungewollt gelöst wird.

Die Erfindung wird nachfolgend anhand eines Ausführungsbeispiels erläutert. Es zeigen:
- Figur 1: die erfindungsgemäße Befestigungseinrichtung in einem Vertikalschnitt; und
- Figur 2: die Schraube und das Adapterelement sowie eine Unterlegscheibe und eine Hülse der Befestigungseinrichtung aus Figur 1 in einer vergrößerten perspektivischen Darstellung.

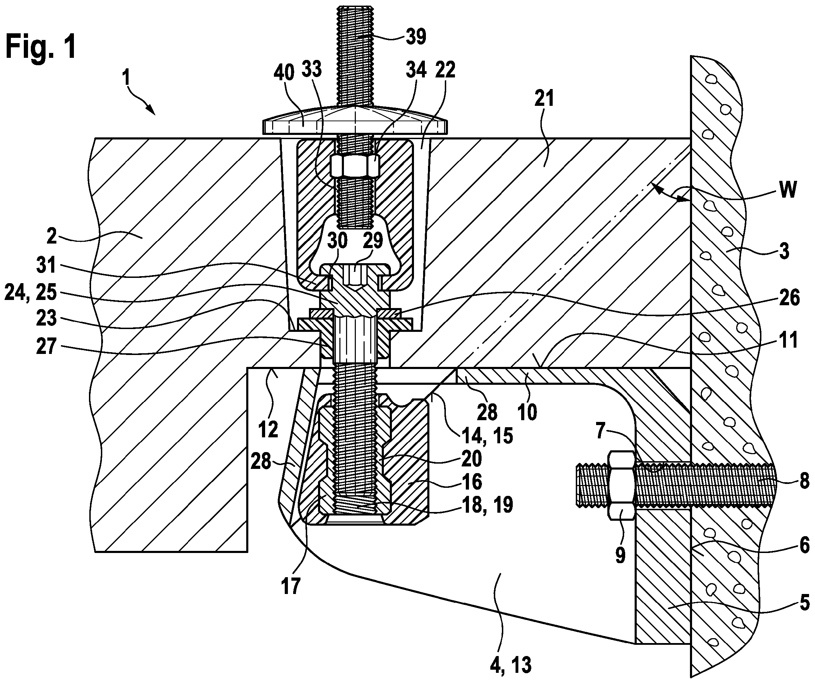

Figur 1 zeigt die erfindungsgemäße Befestigungsvorrichtung 1 zur Befestigung eines Objekts 2, hier eines Toilettenbeckens aus Keramik, an einer Wand 3. Die Befestigungsvorrichtung 1 weist einen winkelförmigen Grundkörper 4 aus Kunststoff auf, dessen erster Schenkel 5 außen eine Anlagefläche 6 zur Anlage an der Wand 3 bildet. Im ersten Schenkel 5 ist ein Befestigungsloch 7 angeordnet, durch den eine in der Wand 3 eingemörtelte Gewindestange 8 ragt. Mittels einer Mutter 9 ist der Grundkörper 4 mit der Anlagefläche 6 gegen die Wand 3 gespannt. Ein zweiter Schenkel 10 des Grundkörpers 4 bildet eine Stütze für das Objekt 2. Die obere Seite des zweiten Schenkels 10 dient als Auflagerfläche 11, auf der das Objekt mit einer oberen Innenwand 12 zur Anlage kommt.

Der winkelförmige Grundkörper 4 weist unter anderem zur Verstärkung Seitenwände 13 auf. Die Seitenwände 13 stehen senkrecht zu beiden Schenkeln 5, 10, wobei nur eine der Seitenwände 13 dargestellt ist, während die andere Seitenwand 13 symmetrisch vor der Schnittebene angeordnet ist. Nach innen weisend ist an der Seitenwand 13 je eine Führungsfläche 14 angeordnet, die schräg in einem Winkel W von etwa 50° zur Wand 3 bzw. zur Anlagefläche 6 steht. Die Führungsflächen 14 bilden eine Führung 15 eines zwischen den Seitenwänden 13 angeordneten, in etwa quaderförmigen Schlittens 16 aus Kunststoff, der eine korrespondierende Kontur (nicht dargestellt) aufweist. Im Schlitten 16 ist ein längliches, zylindrisches Innengewindeelement 17 aus Metall mit einem ein Innengewinde 18 aufweisenden Durchgangsloch 19 und einer mittigen Einschnürung 20 an der Außenseite angeordnet. Bei der Herstellung des Schlittens 16 wird das Innengewindeelement 17 als Einlegeteil umspritzt und findet daher optimalen Halt.

Das Objekt weist einen Befestigungsabschnitt 21 auf, der bis zur Wand 3 ragt und sich auf der Auflagerfläche 11 abstützt. Der Befestigungsabschnitt 21 wird durch eine Aufnahmeöffnung 22 durchsetzt. Die Aufnahmeöffnung 22 verjüngt sich zum Grundkörper 4 hin stufenartig und bildet hierdurch eine Schulter 23, an der sich der Kopf 24 einer Schraube 25 aus Stahl abstützt. Die Schraube 25 wird bei der Montage des Objekts 2 an der Wand 3 nach dem Aufsetzen des Objekts 2 auf dem Grundkörper 4 in die Aufnahmeöffnung 22 gesteckt. Sie ragt durch die Aufnahmeöffnung 22 hindurch bis in den Grundkörper 4 und wird in das Innengewindeelement 17 eingeschraubt. Die Abstützung an der Schulter 23 erfolgt nicht direkt, da der Kontakt von Stahl auf Keramik zu Rissen in der Keramik führen könnte. Der Kopf 24 stützt sich daher über eine Unterlegscheibe 26 und eine hutförmige Hülse 27 auf der Schulter 23 ab. Gleichzeitig verhindert die Hülse 27 auch eine unmittelbare radiale Anlage der Schraube 25 in der Aufnahmeöffnung 22.

Beim Anziehen der Schraube 25 wird der Schlitten 16 schräg entlang der Führung 15 gezogen. Dies bewirkt ein Heranziehen des Objekts 2 sowohl in Richtung des Grundkörpers 4 als auch in Richtung der Wand 3.

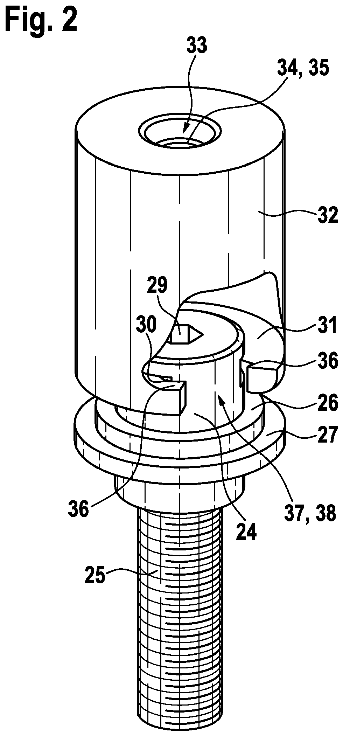

Der Kopf 24 der Schraube 25 hat eine zylindrische Grundform mit einem relativ kleinen Innensechskant 29 als Werkzeugansatz, wobei statt dem Innensechskant 29 auch ein sternförmiger Werkzeugansatz, Kreuzschlitz oder dergleichen zum Einsatz kommen könnte. Seitlich sind in den Kopf 24 zwei parallele, sekantenartig verlaufende Nuten 30 eingebracht. In die Nuten 30 greifen jeweils Klauen 31 eines Adapterelements 32 aus Kunststoff ein. Zum besseren Verständnis sind die Schraube 25, das Adapterelement 32 sowie die Hülse 27 und die Unterlegscheibe 26 in Figur 2 vergrößert in perspektivischer Darstellung gezeigt. Das Adapterelement 32 hat im Wesentlichen eine zylindrische Außenform und ist mittig von einer Durchgangsbohrung 33 durchsetzt. Die obere Hälfte der Durchgangsbohrung 33 entspricht dabei im Durchmesser im Wesentlichen dem Schaft der Schraube 25 und weist eine umspritzt eingebettete Befestigungsmutter 34 auf, die die Durchgangsbohrung 33 verjüngt und dem Adapterelement 32 ein Aufnahmegewinde 35 verleiht. In der unteren Hälfte der Durchgangsbohrung 33 erweitert sich diese glockenförmig und schließt mit den Klauen 31 ab. Die Durchgangsbohrung 33 erweitert sich außerdem in diesem Bereich radial zu einer Seite hin, so dass das Adapterelement 32 seitlich offen ist. Hierdurch kann das Adapterelement 32 im Rahmen der Vormontage der Befestigungsvorrichtung 1 seitlich auf den Kopf 24 der Schraube 25 aufgeschoben werden. Die Klauen 31 umfassen U-förmig den Kopf 24 im Bereich der Nuten 30. An ihren äußeren, radialen Enden weisen die Klauen 31 jeweils zueinander gewandte Kröpfungen 36 auf. Hierdurch wird eine Engstelle 37 geschaffen, die bewirkt, dass das Adapterelement 32 nur mit leichtem Kraftaufwand auf den Kopf 24 geschoben und wieder von diesem gelöst werden kann. Die Klauen 31 bilden so mit den Nuten 30 der Schraube 25 eine Schnappverbindung 38. Die Klauen 31 sind ansonsten so in ihrer lichten Weite und in der Position der Kröpfungen 36 bemessen, dass das Adapterelement 32 mit radialem Spiel in alle Richtungen an der Schraube 25 gehalten ist. Gleichzeitig entsteht durch den Eingriff der Klauen 31 in die Nuten 30 eine formschlüssig zugfeste und drehfeste Verbindung.

Wie oben beschrieben wird zum Heranziehen des Objekts 2 an die Wand 3 die Schraube 25 mit einem Außensechskantschlüssel (nicht dargestellt) angezogen. Die Befestigungsmuter 34 ist so groß und der Innensechskant 29 so klein dimensioniert, dass der Außensechskantschlüssel durch die Durchgangsbohrung 33 des Adapterelements 32 hindurch bis in den Innensechskant 29 geführt werden kann.

Anschließend kann ein Gewindebolzen 39 in die Befestigungsmutter 34 eingeschraubt werden. Im Ausführungsbeispiel weist der Gewindebolzen 39 eine flanschartige Erweiterung 40 auf, die die Aufnahmeöffnung 22 abdeckt. Am Gewindebolzen 39 könnte beispielsweise ein Scharnier eines Beckensitzes (nicht dargestellt) befestigt werden. Durch die drehfeste Verbindung von Befestigungsmutter 34, Adapterelement 32 und Schraube 25 kann es bei der Montage nicht zu einem ungewollten Durchdrehen der Bauteile kommen. Gleichzeitig kann durch das Spiel zwischen Adapterelement 32 und Schraube 25 ein Toleranzausgleich stattfinden, wenn beispielsweise der Abstand zweier Scharniere eines Beckensitzes nicht exakt mit der Position der beiden entsprechenden Befestigungsvorrichtungen 1 übereinstimmt.

Sollte der Gewindebolzen 39 anschließend demontiert werden müssen, so kann er aus der Befestigungsmutter 34 herausgeschraubt werden, wobei wiederum ein Mitdrehen durch die drehfesten Verbindungen ausgeschlossen ist. Dadurch, dass der Durchmesser des Gewindebolzens 39 deutlich kleiner als der der Schraube 25 ist, kommt es beim Lösen des Gewindebolzen 39 nicht zu einem Mitdrehen der Schraube 25.

### Bezugszeichenliste

### Befestigungsvorrichtung insbesondere für wandhängende Sanitärobjekte

- 1: Befestigungsvorrichtung
- 2: Objekt
- 3: Wand
- 4: Grundkörper
- 5: erster Schenkel
- 6: Anlagefläche
- 7: Befestigungsloch
- 8: Gewindestange
- 9: Mutter
- 10: zweiter Schenkel
- 11: Auflagerfläche
- 12: Innenwand
- 13: Seitenwand
- 14: Führungsfläche
- 15: Führung
- 16: Schlitten
- 17: Innengewindeelement
- 18: Innengewinde
- 19: Durchgangsloch
- 20: Einschnürung
- 21: Befestigungsabschnitt
- 22: Aufnahmeöffnung
- 23: Schulter
- 24: Kopf
- 25: Schraube
- 26: Unterlegscheibe
- 27: Hülse
- 28: Anschlag
- 29: Innensechskant
- 30: Nut
- 31: Klaue
- 32: Adapterelement
- 33: Durchgangsbohrung
- 34: Befestigungsmutter
- 35: Aufnahmegewinde
- 36: Kröpfung
- 37: Engstelle
- 38: Schnappverbindung
- 39: Gewindebolzen
- 40: Erweiterung
- W: Winkel der Führung 15 zur Anlagefläche 6

## Patentansprüche

1. Befestigungsvorrichtung (1), insbesondere für wandhängende Sanitärobjekte, mit
- einem Grundkörper (4), der eine Anlagefläche (6) zur Anlage an einer Wand (3) aufweist, und an dem ein Objekt (2), insbesondere ein Sanitärobjekt, befestigbar ist,
- einem Schlitten (16), der am Grundkörper (4) schräg zur Anlagefläche (6) geführt ist und ein Innengewindeelement (17) aufweist,
- einer Schraube (25) zur Durchführung durch eine Aufnahmeöffnung (22) des Objekts (2), die in das Innengewindeelement (17) einschraubbar ist,
- einem Adapterelement (32), das zugfest am Kopf (24) der Schraube (25) angeordnet ist und ein Aufnahmegewinde (35) aufweist,
- wobei das Aufnahmegewinde (35) radial verschieblich zur Schraube (25) ist,
**dadurch gekennzeichnet, dass** das Adapterelement (32) formschlüssig drehfest mit dem Kopf (24) verbunden ist.

2. Befestigungsvorrichtung nach Anspruch 1, **dadurch gekennzeichnet, dass** der Kopf (24) mindestens eine, vorzugsweise zwei, sekantenartig angeordnete Nuten (30) aufweist.

3. Befestigungsvorrichtung nach Anspruch 2, **dadurch gekennzeichnet, dass** das Adapterelement (32) eine Klaue (31) aufweist, die in die Nut (30) eingreift und mit der Schraube (25) eine Schnappverbindung (38) bildet.

## Claims

1. Fixing device (1), especially for wall-hung items of sanitaryware, having
- a main body (4), which has a contact surface (6) for contact with a wall (3) and to which an article (2), especially an item of sanitaryware, is arranged to be fixed,
- a carriage (16), which is guided on the main body (4) at an angle with respect to the contact surface (6) and has an internally threaded element (17),
- a screw (25) for passing through a receiving opening (22) of the article (2), which screw is arranged to be screwed into the internally threaded element (17),
- an adapter element (32), which is arranged on the head (24) of the screw (25) so as to be resistant to tension and has a receiving thread (35),
- wherein the receiving thread (35) is displaceable radially with respect to the screw (25),
**characterised in that** the adapter element (32) is interlockingly connected to the head (24) so as to be fixed against relative rotation.

2. Fixing device according to claim 1, **characterised in that** the head (24) has at least one, preferably two, grooves (30) which are arranged secant-like.

3. Fixing device according to claim 2, **characterised in that** the adapter element (32) has a claw (31) which engages in the groove (30) and forms a snap connection (38) with the screw (25).

## Revendications

1. Dispositif de fixation (1) dévolu, en particulier, à des objets sanitaires à suspension murale et comprenant
- un corps de base (4) pourvu d'une surface d'appui (6) destinée à venir en applique contre une paroi (3), et auquel peut être fixé un objet (2), notamment un article sanitaire,
- une pièce coulissante (16) guidée sur ledit corps de base (4), à l'oblique par rapport à ladite surface d'appui (6), et munie d'un élément (17) à filetage intérieur,
- une vis (25), réalisée pour traverser un orifice de réception (22) dudit objet (2) et pouvant être vissée dans ledit élément (17) à filetage intérieur,
- un élément adaptateur (32) implanté sur la tête (24) de la vis (25), avec résistance à la traction, et pourvu d'un filetage de réception (35),
- lequel filetage de réception (35) peut coulisser radialement pas rapport à ladite vis (25),
**caractérisé par** un verrouillage rotatif de l'élément adaptateur (32) avec la tête (24), instauré par complémentarité de formes.

2. Dispositif de fixation selon la revendication 1, **caractérisé par le fait que** la tête (24) comporte au moins une, de préférence deux rainures (30) agencées à la manière de sécantes.

3. Dispositif de fixation selon la revendication 2, **caractérisé par le fait que** l'élément adaptateur (32) est doté d'une griffe (31) qui pénètre dans la rainure (30), et forme une liaison encliquetable (38) en association avec la vis (25).
